# EUROPÄISCHE PATENTSCHRIFT

(11) **EP 0 688 975 B1**
(45) Veröffentlichungstag und Bekanntmachung des Hinweises auf die Patenterteilung: **28.04.1999**
(21) Anmeldenummer: 95108945.7
(22) Anmeldetag: 10.06.1995
(51) Int. Cl.: F16H 19/00, F16H 55/26, G11B 17/04, G11B 5/55

(54) **Zahnstangenantrieb**
Rack drive
Mécanisme d'entraînement à crémaillère

(30) Priorität: 21.06.1994 DE 4421647
(43) Veröffentlichungstag der Anmeldung: 27.12.1995
(73) Patentinhaber: DEUTSCHE THOMSON-BRANDT GMBH, 78048 Villingen-Schwenningen (DE)
(72) Erfinder: Kammerer, Manfred, D-78112 St. Georgen (DE)

(56) Entgegenhaltungen:
- GB-A- 1 362 449
- US-A- 3 267 751
- US-A- 4 669 328
- US-A- 5 032 941
- PATENT ABSTRACTS OF JAPAN vol. 13 no. 502 (P-958) ,13.November 1989 & JP-A-01 201877 (TOSHIBA CORP) 14.August 1989,

## Beschreibung

Die Erfindung betrifft einen Zahnstangenantrieb mit zum Zahnspielausgleich zwischen Zahnstange und Zahnradantrieb vorgesehenen Mitteln, der eine geringe Anzahl von Formelementen sowie einen geringen Platzbedarf erfordert und dennoch eine hohe Positioniergenauigkeit des Antriebs durch ein geringes Spiel bzw. eine geringe Lose zwischen Zahnstange und Zahnradantrieb mit geringer Reibung aufweist. Die Anwendung ist insbesondere für eine Positioniereinrichtung in einem Aufzeichnungs- und/oder Wiedergabegerät für optische Aufzeichnungsträger vorgesehen, wobei dadurch das Anwendungsgebiet jedoch nicht eingeschränkt ist.

Zum Erreichen einer hohen Positioniergenauigkeit sowie zum Verringern eines Spiels bzw. einer Lose zwischen Zahnstange und Zahnradantrieb sind Mittel zum Toleranzausgleich erforderlich, da sowohl aus den Fertigungstoleranzen der Einzelteile als auch aus der Toleranzkette zwischen dem Lagerpunkt der Zahnstange und dem Lagerpunkt des Antriebsritzels ein Zahnspiel resultiert. Es ist bereits ein Disc player bekannt, der zum Zahnspielausgleich zwei gegeneinander federnd verspannte Zahnstangen aufweist, vgl. EP 0356984 A2 Fig. 18 - Fig. 21. Die bekannte Zahnstangenanordnung ist fester Bestandteil einer Abtast- und/oder Aufzeichnungseinrichtung, die auf zwei Führungsstangen gleitet, so daß zusätzlich Parallelitätsabweichungen der Zahnstangenfront von der Führung Änderungen des Abstandes der Zahnstange zum Antriebszahnrad verursachen. Gemäß o.g. Quelle ist es bekannt, zwei parallel angeordnete Zahnstangen bzw. eine zweiteilige Zahnstange zu verwenden, deren Zahnreihen in ein Ritzel oder einen Zahnradantrieb eingreifen, wobei die Zahnstangen mit einer Feder gegeneinander verspannt sind, um die Zähne des Ritzels bzw. Zahnradantriebes spielfrei aufzunehmen. Die bekannte Zahnstangenanordnung besteht aus einer ersten Zahnstange und einer zweiten Zahnstange, die mit einer Feder gegeneinander verspannt sind. Die erste Zahnstange weist an ihren gegenüberliegenden Enden T-förmige Öffnungen sowie eine mittig angeordnete Mittenöffnung zur Aufnahme der die Zahnstangen gegenseitig federnd verspannenden Feder auf. Die T-förmigen Öffnungen besitzen einen sich verengenden Abschnitt, der zum Führen und Halten der zweiten Zahnstange an Rastnasen vorgesehen ist. Die Rastnasen der zweiten Zahnstange sind den T-förmigen Öffnungen der ersten Zahnstange entsprechend vorgesehen. Weiterhin weist die erste Zahnstange einen Vorsprung auf, der einen in die Mittenöffnung gerichteten Zapfen zur Aufnahme einer Spannfeder trägt. Auch die zweite Zahnstange besitzt eine Mittenöffnung sowie einen Vorsprung, der einen in ihre Mittenöffnung gerichteten Zapfen zur Aufnahme der Feder aufweist. Zum Bilden der Zahnstangenanordnung mit Zahnspielausgleich wird die zweite Zahnstange mit der ersten Zahnstange montiert. Die Rastnasen der zweiten Zahnstange werden hierzu durch die T-förmigen Öffnungen der ersten Zahnstange hindurchgeführt und die Zahnstangen mit einer Feder gegeneinander verspannt. Um die Zahnstangenanordnung mit einem Zahnradantrieb oder einem Ritzel in Eingriff zu bringen, müssen die an den Seitenflächen der Zahnstangen vorhandenen Zahnungen zueinander ausgerichtet werden. Hierzu wird die zweite Zahnstange zur ersten Zahnstange gegen die Feder in Längsrichtung verschoben. Die Zähne des Antriebszahnrades bzw. Stirnradantriebs oder Antriebsritzels werden dann von den Zahnreihen der Zahnstangen eingeklemmt, die mit einer Feder gegeneinander verspannt sind. Das Einklemmen der Zähne des Stirnradantriebs zwischen federnd verspannte Zahnreihen führt zwar einerseits zum Verringern des Zahnspiels bzw. der Lose zwischen Zahnstange und Zahnradantrieb jedoch andererseits auch zu nachteilig hohen Reibungsverlusten und großem Energiebedarf. Dies ist insbesondere für die Lebensdauer der Batterie bei transportablen Geräten, die vom Stromnetz unabhängig betrieben werden, nachteilig. Weiterhin erfordert die Montage der Zahnstangen und des Zahnstangenantriebes einen hohen Aufwand. Die Einzelteile sind trotz der Mittel zum Zahnspielausgleich aufgrund der Toleranzkette zwischen dem Lagerpunkt der Zahnstange und dem Lagerpunkt des Antriebsritzels mit hoher Genauigkeit herzustellen. Es sind zwei Zahnstangen erforderlich und die Zahnstangen weisen zahlreiche Formelemente und mehrere unterschiedliche Konturen auf, wodurch ein hoher Herstellungsaufwand und aufwendige Werkzeuge notwendig sind. Als Formelement werden die T-förmigen Öffnungen, die T-förmigen Rastnasen, die Vorsprünge sowie die Zapfen einschließlich der Mittenöffnungen bezeichnet.

Es ist deshalb Aufgabe der Erfindung, einen Zahnstangenantrieb mit geringem Zahnspiel zu schaffen, der eine geringe Anzahl von Einzelteilen und Formelementen sowie einen geringen Platzbedarf erfordert, dennoch eine hohe Positioniergenauigkeit des Antriebs durch ein geringes Spiel bzw. eine geringe Lose zwischen Zahnstange und Zahnradantrieb mit geringer Reibung aufweist und sowohl hinsichtlich seiner Montageeigenschaften als auch hinsichtlich der Anzahl und Formen verwendeter Formelemente die Nachteile bekannter Lösungen beseitigt.

Erfindungsgemäß wird diese Aufgabe dadurch gelöst, daß der Zahnstangenantrieb ein Einhängezahnelement enthält, das von einer Zahnstange gebildet ist, die parallel zu ihrer Zahnreihe eine an einem Lagerbolzen ihres Antriebsritzels geführte Führungsöffnung aufweist, wobei das Einhängezahnelement vorzugsweise mit einer veränderbar zu positionierenden Einrichtung über einen Mitnahmezapfen verbunden und einstückig aus Acetalcopolymerisat hergestellt ist.
Zum Zahnspielausgleich wird ein Einhängezahnelement verwendet, das von einer Zahnstange gebildet ist, die parallel zu ihrer Zahnreihe eine an einem Lagerbolzen ihres Antriebsritzels geführte Führungsöffnung aufweist. Ein derartiger Zahnstangenantrieb wird vorzugsweise als Positioniereinrichtung zum Steuern einer Abtast- und/oder Aufzeichnungseinrichtung in einem Aufzeichnungs- und/oder Wiedergabegerät für optische Aufzeichnungsträger verwendet.
Es ist ein Aspekt der Erfindung, einen Zahnstangenantrieb mit geringem Zahnspiel zu schaffen, der eine geringe Anzahl von Einzelteilen und Formelementen aufweist. Der Zahnstangenantrieb ist hierzu mit nur einer Zahnstange vorgesehen, die Bestandteil eines Einhängezahnelementes ist. Der Zahnstangenantrieb weist mit nur einer Zahnstange dennoch eine hohe Positioniergenauigkeit des Antriebs durch ein geringes Spiel bzw. eine geringe Lose zwischen Zahnstange und Zahnradantrieb mit geringer Reibung auf.
Dies wird dadurch erreicht, daß die Zahnstange als Bestandteil und mit dem Einhängezahnelement unmittelbar an der Achse bzw. am Lagerpunkt des Antriebszahnrades geführt wird. Dadurch wird die Toleranzkette zwischen dem Lagerpunkt der Zahnstange und dem Lagerpunkt des Antriebszahnrades verringert und bereits mit nur einer Zahnstange bzw. einem Einhängezahnelement ein geringes Spiel bzw. eine geringe Lose zwischen Zahnstange und Zahnradantrieb gewährleistet. Die Zähne des Antriebszahnrades werden nicht eingeklemmt, so daß der Zahnstangenantrieb eine geringe Reibung aufweist. Eine zweite Zahnstange sowie die Feder zum Verspannen von zwei Zahnstangen sind nicht mehr erforderlich. Die einzige Zahnstange bzw. das Einhängezahnelement weist eine geringe Anzahl an Formelementen auf und kann als Einzelteil hinsichtlich vorteilhafter Gleiteigenschaften beispielsweise aus Acetalcopolymerisat hergestellt werden. Da nur eine Zahnstange erforderlich ist und Antriebszahnrad sowie Zahnstange einen gemeinsamen Lagerpunkt aufweisen, können zum weiteren Verringern eines Verdrehflankenspiels spezielle Verzahnungen wie z.B. Hybridzahnformen für Antriebszahnrad und Zahnstange gewählt werden. Es entfällt das Montieren einer aus zwei Zahnstangen bestehenden Zahnstangenanordnung, die durch Verschieben ihrer Zahnreihen gegen eine Feder mit einem Antriebszahnrad in Eingriff zu bringen ist.
Das Einhängezahnelement besteht aus einer Zahnstange, die parallel zu ihrer Zahnreihe eine Führungsöffnung aufweist. Mit den Zähnen der Zahnstange des Einhängezahnelements ist ein Antriebszahnrad im Eingriff, um den Zahnstangenantrieb zu bilden. Ein Lagerbolzen des Antriebszahnrades ist gleichzeitig als Führung für die Zahnstange bzw. das Einhängezahnelement vorgesehen. Die Führungsöffnung der Zahnstange bzw. des Einhängezahnelementes ist derart angeordnet, daß sie während des Eingriffs des Antriebszahnrades in die Zahnstange am Lagerbolzen anliegt, um ein Wegdrücken des Antriebszahnrades oder der Zahnstange sowie ein Zahnspiel während der Bewegung bzw. Kraftübertragung zwischen Zahnstange und Antriebszahnrad zu verhindern.

Dadurch, daß die Zahnstange am Lagerbolzen des Antriebszahnrades geführt wird und eine zweiteilige Zahnstangenanordnung mit Mitteln zum Verbinden und Verschieben sowie Mittel zum gegenseitigen Verspannen nicht mehr erforderlich sind, kann der Zahnstangenantrieb mit geringem Platzbedarf realisiert werden. Die Anwendung des Zahnstangenantriebs ist aufgrund des geringen Platzbedarfs für Positioniereinrichtungen in transportablen Aufzeichnungs- und/oder Wiedergabegeräten für optische Aufzeichnungsträger, wie beispielsweise zum Steuern einer Abtast- und/oder Aufzeichnungseinrichtung, besonders vorteilhaft. Die Verwendung ist jedoch auf eine derartige Anwendung nicht eingeschränkt.
Die Zahnstange bzw. das Einhängezahnelement ist über einen Mitnahmezapfen mit der Abtast- und/oder Aufzeichnungseinrichtung, die hier auch als sogenannter Pickup bezeichnet wird, verbunden, so daß eine mit hoher Genauigkeit zu gewährleistende Parallelität zwischen Zahnstangenfront und Führungsstange bzw. den Führungselementen der Abtast- und/oder Aufzeichnungseinrichtung nicht erforderlich ist. Der Mitnahmezapfen und eine den Mitnahmezapfen aufnehmende Bohrung können wahlweise am Einhängezahnelement oder Pickup vorgesehen werden. Diese nicht starre Verbindung der Zahnstange mit der Abtast- und/oder Aufzeichnungseinrichtung ist ein weiteres Mittel zum Verringern des Zahnspiels zwischen Zahnstange und Antriebszahnrad, welches die Verwendung nur einer Zahnstange für einen Zahnstangenantrieb mit geringem Zahnspiel vorteilhaft beeinflußt. Weiterhin führt die Verwendung der vorgeschlagenen Lösung in Aufzeichnungs- und/oder Wiedergabegeräten zu Vorteilen im Service, da beispielsweise ein Pickup durch Lösen vom Mitnahmezapfen und seiner Lagerachse mit geringem Aufwand ausgetauscht werden kann. Eine Teildemontage des Antriebs- bzw. Getriebes entfällt.

Nachfolgend wird die Erfindung anhand von Zeichnungen näher erläutert.
Es zeigen:
- Fig. 1: Zahnstangenantrieb für eine Positioniereinrichtung in einem Aufzeichnungs- und/oder Wiedergabegerät für optische Aufzeichnungsträger,
- Fig. 2: Darstellung einer als Einhängezahnelement ausgebildeten Zahnstange in drei Ansichten,
- Fig. 3: perspektivische Darstellung einer bekannten ersten Zahnstange einer bekannten Zahnstangenanordnung,
- Fig. 4: perspektivische Darstellung einer bekannten zweiten Zahnstange der bekannten Zahnstangenanordnung,
- Fig. 5: bekannte Zahnstangenanordnung mit zwei Zahnreihen zum Einspannen der Zähne eines Antriebszahnrades und
- Fig. 6: Darstellung einer Zahnstangenanordnung mit einer als Einhängezahnelement ausgebildeten Zahnstange zum Zahnspielausgleich.

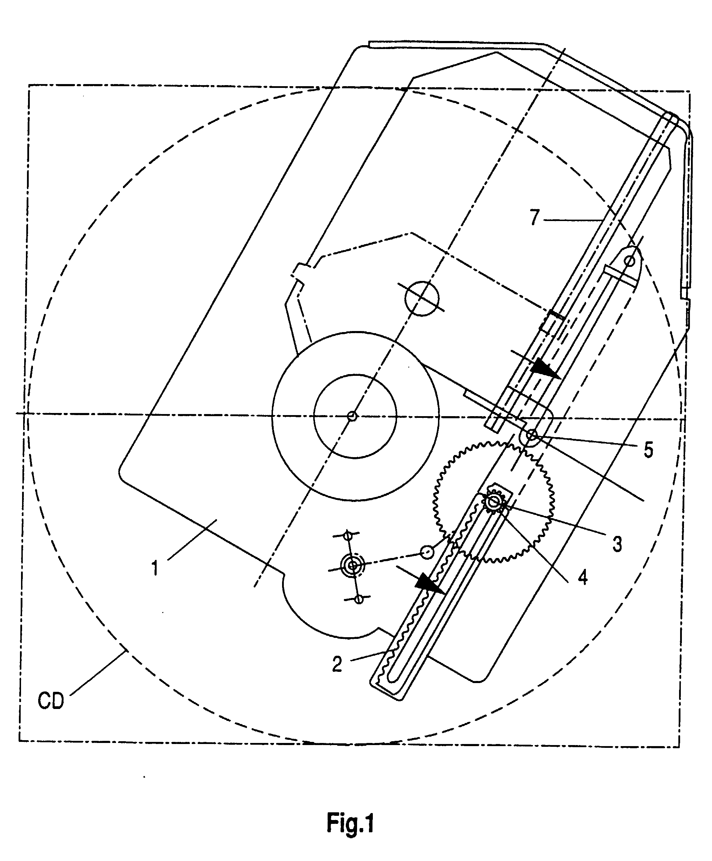

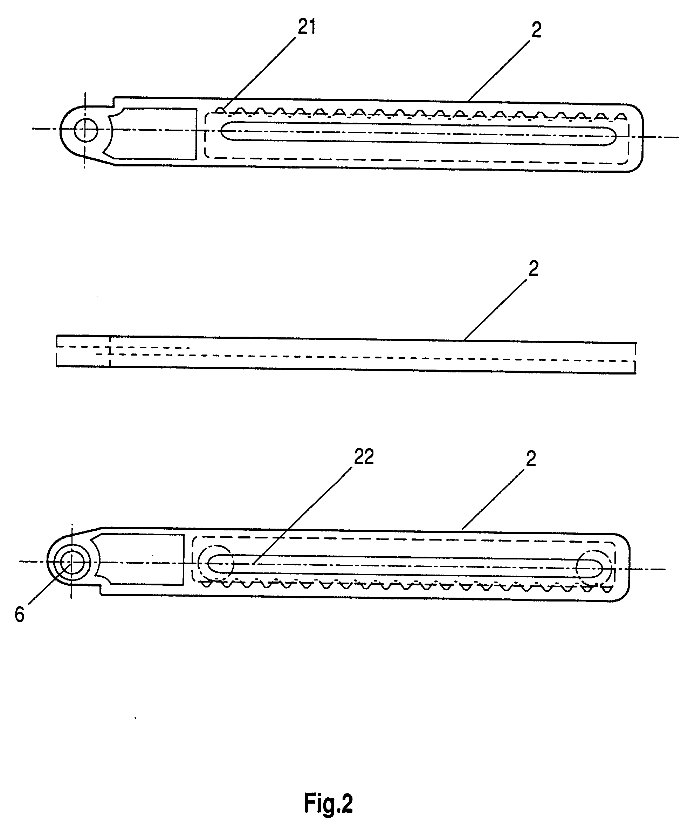

Der in Fig.1 dargestellte Zahnstangenantrieb für eine Positioniereinrichtung in einem Aufzeichnungs- und/oder Wiedergabegerät für optische Aufzeichnungsträger CD wird von einem Einhängezahnelement 2 gebildet, das sich mit einem Antriebsritzel 4 im Eingriff befindend angeordnet ist. Das Einhängezahnelement 2 besteht vorzugsweise als Einzelteil aus einer Zahnstange 21 mit einer Führungsöffnung 22 und ist in Fig.2 in drei Ansichten dargestellt. Das in Figur 1 dargestellte Antriebsritzel 4 treibt das Einhängezahnelement 2 über die Zahnstange 21 des Einhängezahnelementes 2 an und ist mit einem Lagerbolzen 3 auf einer Grundplatte 1 befestigt, die auch eine Führungsstange 7 für eine auch als Pickup bezeichnete Abtast- und/oder Aufzeichnungseinrichtung des Aufzeichnungs- und/oder Wiedergabegerätes für optische Aufzeichnungsträger CD trägt. Die Abtast- und/oder Aufzeichnungseinrichtung ist mit dem Einhängezahnelement 2 über einen Mitnahmezapfen 5 verbunden. Das die Zahnstange 21 mit Mitteln zum Zahnspielausgleich bildende Einhängezahnelement 2 ist vorzugsweise ein hinsichtlich vorteilhafter Gleiteigenschaften beispielsweise aus Acetalcopolymerisat hergestelltes Plastformteil, das Fig.2 entsprechend nur eine geringe Anzahl von Formelementen aufweist. Die Zahnstange 21 bzw. das Einhängezahnelement 2 weist Fig.2 entsprechend neben der Zahnreihe der Zahnstange 21 und einer schlitzförmigen Führungsöffnung 22 lediglich eine Öffnung 6 auf.

Diese Öffnung 6 ist zur drehbaren Aufnahme eines in Fig.1 dargestellten Mitnahmezapfens 5 vorgesehen, über den die Zahnstange 21 bzw. das Einhängezahnelement 2 mit der auch als Pickup bezeichneten Abtast- und/oder Aufzeichnungseinrichtung verbunden ist. Die Abtast- und/oder Aufzeichnungseinrichtung bzw. der Pickup ist auf einer Führungsstange 7 mit Führungselementen gleitend angeordnet und wird mit dem Zahnstangenantrieb positioniert. Durch diese nicht starre Verbindung der Zahnstange 21 mit dem Einhängezahnelement 2 ist eine mit hoher Genauigkeit zu gewährleistende Parallelität zwischen der Zahnstangenfront der Zahnstange 2 und der Führungsstange 7 sowie den Führungselementen der Abtast- und/oder Aufzeichnungseinrichtung nicht erforderlich, wodurch Anforderungen an die Genauigkeit der Einzelteilherstellung gesenkt werden können. Der Zahnstangenantrieb mit geringem Zahnspiel trotz einer geringen Anzahl von Einzelteilen und Formelementen sowie mit geringem Platzbedarf, der dennoch eine hohe Positioniergenauigkeit des Antriebs durch ein geringes Spiel bzw. eine geringe Lose sowie eine geringe Reibung aufweist, und sowohl hinsichtlich seiner Montageeigenschaften als auch hinsichtlich der Anzahl und Formen verwendeter Formelemente die Nachteile bekannter Lösungen beseitigt, wird dadurch erreicht, daß nur eine einzige Zahnstange 21 vorgesehen ist, die als Einhängezahnelement 2 ausgebildet ist, wobei eine schlitzförmige Führungsöffnung 22 im Einhängezahnelement 2 an einem in Fig.1 dargestellten Lagerbolzen 3 geführt wird, der vorzugsweise auch das Antriebszahnrad bzw. Antriebsritzel 4 trägt. Mit dem Einhängezahnelement 2, das sowohl die Zahnreihe der Zahnstange 2 als auch die schlitzförmige Führungsöffnung 22 für die Zahnstange 2 bildet, wird eine bei einem bekannten Zahnstangenantrieb mit Stirnradantrieb sich bis zur Zahnstangenanordnung aufbauende Toleranzkette wesentlich verringert, so daß beim vorgeschlagenen Zahnstangenantrieb ein geringeres Zahnspiel auftritt. Der Zahnstangenantrieb wird mit nur einer Zahnstange 2 gebildet, so daß er eine geringere Anzahl von Einzelteilen und Formelementen aufweist. Zusätzlich zur zweiten Zahnstange ist eine Feder nicht erforderlich. Da nur eine Zahnstange 2 vorgesehen ist, ist nur ein geringer Montageaufwand erforderlich. Dadurch, daß die Zahnstange 21 am Lagerbolzen 3 des Antriebszahnrades bzw. Antriebsritzels 4 geführt wird und eine zweiteilige Zahnstangenanordnung mit Mitteln zum Verbinden und Verschieben sowie Mittel zum gegenseitigen Verspannen nicht mehr erforderlich sind, kann der Zahnstangenantrieb mit geringem Platzbedarf realisiert werden. Die Anwendung des Zahnstangenantriebs ist aufgrund des geringen Platzbedarfs für Positioniereinrichtungen in transportablen Aufzeichnungs- und/oder Wiedergabegeräten für optische Aufzeichnungsträger, wie beispielsweise zum Steuern einer Abtast- und/oder Aufzeichnungseinrichtung, besonders vorteilhaft. Die Verwendung ist jedoch auf eine derartige Anwendung nicht eingeschränkt sondern erstreckt sich auf alle Linearantriebe, die mit einfachen Mitteln eine hohe Positioniergenauigkeit aufweisen sollen.

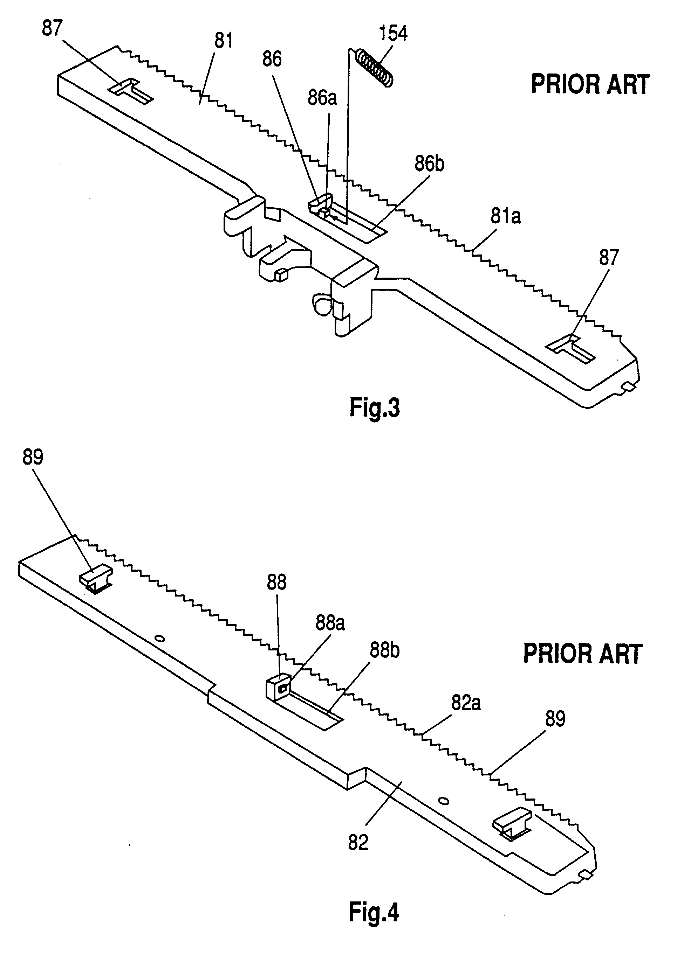

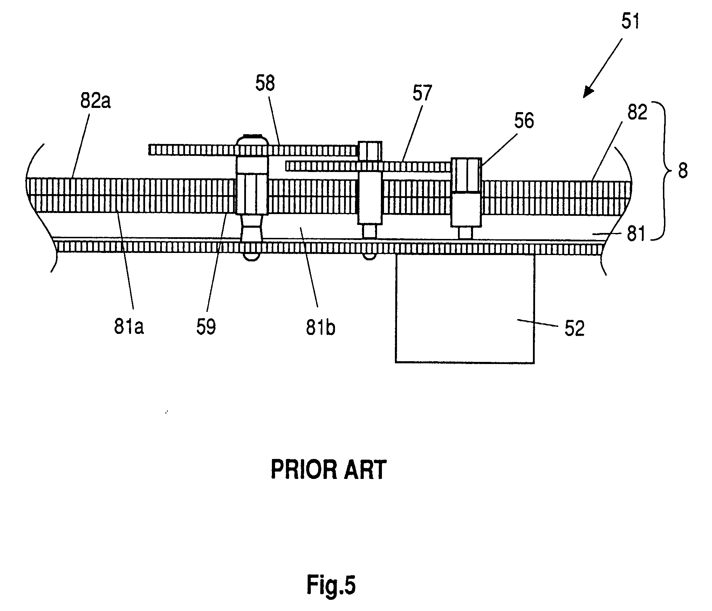

Die Figuren 3 und 4 beziehen sich auf die als Prior Art angegebene bekannte Lösung. Diese Vorgängerlösung ist aus EP 03 56 984 A2 bekannt und die im Zusammenhang mit der vorliegenden Erfindung angegebene Fig. 3 entspricht im wesentlichen Fig. 18 und Fig. 4 entspricht Fig. 19 der bekannten Lösung. In diesen Figuren wurden deshalb auch die Bezugszeichen der bekannten Lösung verwendet. Wie bereits einleitend der Beschreibung angegeben, weist die gemäß EP 0356984 A2 Fig. 18 - Fig. 20 bekannte Zahnstangenanordnung zum Zahnspielausgleich zwei gegeneinander federnd verspannte Zahnstangen 81,82 auf. Die Zahnstangenanordnung besteht aus einer ersten Zahnstange 81 und einer zweiten Zahnstange 82, die mit einer Feder 154 gegeneinander verspannt sind. Die erste Zahnstange 81 weist an ihren gegenüberliegenden Enden T-förmige Öffnungen 87 sowie eine mittig angeordnete Mittenöffnung 86b auf. Die T-förmigen Öffnungen 87 besitzen einen verengenden Abschnitt, der zum Führen der zweiten Zahnstange 82 an Rastnasen 89 vorgesehen ist. Den T-förmigen Öffnungen 87 der ersten Zahnstange 81 entsprechend sind auf der zweiten Zahnstange 82 T-förmige Rastnasen 89 vorgesehen. Weiterhin weist die erste Zahnstange 81 einen Vorsprung 86 auf, der einen in die Mittenöffnung 86b gerichteten viereckigen Zapfen 86a zur Aufnahme der Feder 154 trägt. Auch die zweite Zahnstange 82 besitzt eine Mittenöffnung 88b sowie einen Vorsprung 88, der einen in die Mittenöffnung 88b gerichteten viereckige Zapfen 88a zur Aufnahme der Feder 154 aufweist. Zum Bilden der bekannten Zahnstangenanordnung mit Zahnspielausgleich wird die in Fig. 4 dargestellte zweite Zahnstange um 180° gedreht und mit der in Fig. 3 dargestellten ersten Zahnstange 81 montiert. Die Rastnasen 89 werden dabei durch die T-förmigen Öffnungen 87 hindurchgeführt und die Zahnstangen 81, 82 mit der Feder 154 gegeneinander verspannt. Um die Zahnstangenanordnung mit einem Zahnradantrieb oder dem in Fig. 21 dargestellten Ritzel 59 in Eingriff zu bringen, müssen die an den Seitenflächen der Zahnstangen 81, 82 vorhandenen Zahnungen 81a, 82a zueinander ausgerichtet werden. Hierzu wird die zweite Zahnstange 82 zur ersten Zahnstange 81 gegen die Feder 154 in Längsrichtung verschoben. Da die zweite Zahnstange 82 von der ersten Zahnstange 81 nur im verengten Abschnitt der T-förmigen Öffnung 87 gehalten wird, führt dies häufig zum Herausspringen der zweiten Zahnstange 82 während des Montagevorgangs, wodurch der aufwendige Montagevorgang weiter erschwert wird. Dies ist auch für die Demontage zutreffend. Weiterhin weisen die Zahnstangen 81, 82 zahlreiche Formelemente auf, wobei als Formelement die T-förmigen Öffnungen 87, die T-förmigen Rastnasen 89, die Vorsprünge 86, 88 sowie die viereckigen Zapfen 86a und 88a einschließlich der Mittenöffnungen 86b und 88b bezeichnet werden. Die bekannte Zahnstangenanordnung erfordert somit einen hohen Herstellungsaufwand. Den bekannten Zahnstangenantrieb bzw. Transportmechanismus 51 für einen Pickup , der von der zweiteiligen Zahnstange 8 mit einem Antriebsritzel 59 als Stirnradantrieb gebildet ist, zeigt Fig. 5. Das Antriebsritzel 59 wird dabei mit einem Antriebsmotor 52 über ein erstes Zahnrad 57 und ein zweites Zahnrad 58 von einem auf der Welle des Antriebsmotors 52 befestigten Zahnrad 56 angetrieben, um eine Anpassung der Vorschubgeschwindigkeit des Zahnstangenantriebs an die Motordrehzahl zu erreichen.

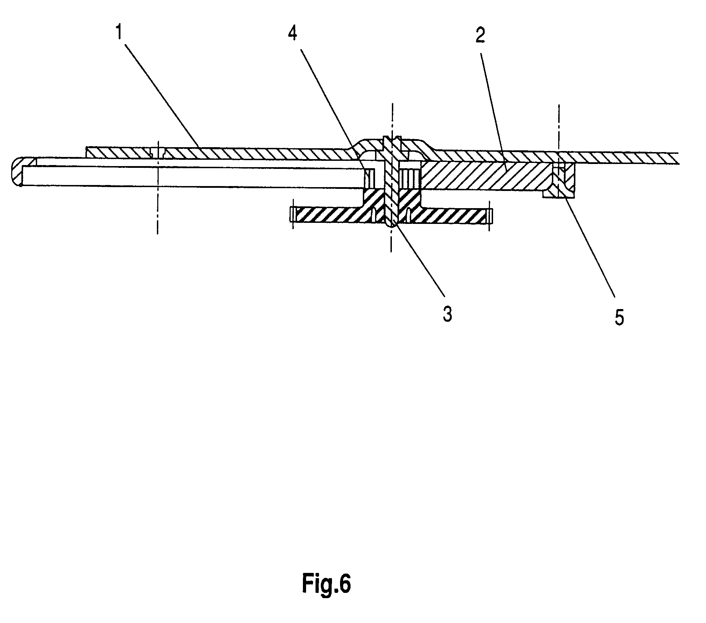

Fig.6 zeigt den mit einem Einhängezahnelement 2 gebildeten Zahnstangenantrieb, wobei der das Einhängezahnelement 2 führende Lagerbolzen 3 von einer Grundplatte 1 aufgenommen wird. Diese Grundplatte 1 trägt Fig.1 entsprechend über eine Führungsstange 7 auch die Abtast- und/oder Aufzeichnungseinrichtung, die mit dem Einhängezahnelement 2 Fig.6 entsprechend über den Mitnahmezapfen 5 verbunden ist. Der mit dem Einhängezahnelement 2 gebildete Zahnstangenantrieb benötigt dadurch ein geringes Bauvolumen und gewährleistet trotz dieses geringen Bauvolumens und der Verwendung nur einer Zahnstange 21 als Bestandteil eines Einhängezahnelementes 2 eine hohe Positioniergenauigkeit durch ein geringes Zahnspiel.

## Patentansprüche

1. Zahnstangenantrieb mit Mittel zum Zahnspielausgleich, **dadurch gekennzeichnet, daß** ein Einhängezahnelement (2) vorgesehen ist, das von einer Zahnstange (21) gebildet ist, die parallel zu ihrer Zahnreihe eine an einem Lagerbolzen (3) ihres Antriebsritzels (4) geführte Führungsöffnung (22) aufweist, die das Mittel zum Zahnspielausgleich bildet.

2. Zahnstangenantrieb nach Anspruch 1, **dadurch gekennzeichnet, daß** das Einhängezahnelement (2) mit einer veränderbar zu positionierenden Einrichtung, wie beispielsweise eine auch als Pickup bezeichnete Abtast- und/oder Aufzeichnungseinrichtung in einem Aufzeichnungs- und/oder Wiedergabegerät für optische Aufzeichnungsträger, über einen Mitnahmezapfen (5) verbunden ist.

3. Zahnstangenantrieb nach einem der Ansprüche 1 oder 2, **dadurch gekennzeichnet, daß** das Einhängezahnelement (2) einstückig ausgeführt ist.

4. Zahnstangenantrieb nach einem der Ansprüche 1 bis 3, **dadurch gekennzeichnet, daß** das Einhängezahnelement (2) einstückig aus Acetalcopolymerisat hergestellt ist.

5. Zahnstangenantrieb mit Mittel zum Zahnspielausgleich, **dadurch gekennzeichnet, daß** zum Zahnspielausgleich ein Einhängezahnelement (2) verwendet wird, das von einer Zahnstange (21) gebildet ist, die parallel zu ihrer Zahnreihe eine an einem Lagerbolzen (3) ihres Antriebsritzels (4) geführte Führungsöffnung (22) aufweist.

6. Zahnstangenantrieb mit Mittel zum Zahnspielausgleich, **dadurch gekennzeichnet, daß** ein Zahnstangenantrieb, der ein Einhängezahnelement (2) enthält, das von einer Zahnstange (21) gebildet ist, die parallel zu ihrer Zahnreihe eine an einem Lagerbolzen (3) ihres Antriebsritzels (4) geführte Führungsöffnung (22) aufweist, als Positioniereinrichtung zum Steuern einer Abtast- und/oder Aufzeichnungseinrichtung in einem Aufzeichnungs- und/oder Wiedergabegerät für optische Aufzeichnungsträger (CD) verwendet wird.

## Claims

1. Rack drive having means for backlash compensation, **characterized in that** a suspension tooth element (2) is provided which is formed by a rack (21) which has a guide opening (22) parallel to its row of teeth, which guide opening (22) is guided on a bearing bolt (3) of the drive pinion (4) for said rack (21) said guide opening (22) forming the means for achieving the backflash compensation.

2. Rack drive according to claim 1, **characterized in that** the suspension tooth element (2) is connected via a drive pin (5) to a unit which can be positioned variably as for example to a scanning and/or a recording unit, also designated a pickup, in a recording and/or playback device for optical recording media.

3. Rack drive according to one of claims 1 or 2, **characterized in that** the suspension tooth element (2) is of integral design.

4. Rack drive according to one of claims 1 to 3, **characterized in that** the suspension tooth element (2) is produced integrally from acetal polymer.

5. Rack drive having means for backlash compensation, **characterized in that** a suspension tooth element (2) is used for backlash compensation, which suspension tooth element (2) is formed by a rack (21) which has a guide opening (22) parallel to its row of teeth, which guide opening (22) is guided on a bearing bolt (3) of the drive pinion (4) for said rack (21).

6. Rack drive having means for backlash compensation, **characterized in that** a rack drive which contains a suspension tooth element (2) which is formed by a rack (21) which has a guide opening (22) parallel to its row of teeth, which guide opening (22) is guided on a bearing bolt (3) of the drive pinion (4) of said rack (21), is used as a positioning device for controlling a scanning and/or recording unit in a recording and/or playback device for optical recording media (CD).

## Revendications

1. Dispositif d'entraînement à crémaillère doté d'un dispositif de compensation du jeu des dents, **caractérisé en ce qu'**un élément d'accrochage denté (2) est prévu, qui est constitué par une crémaillère (21) présentant parallèlement à sa denture un orifice de guidage (22) dirigé vers un axe de palier (3) de son pignon d'entraînement (4) qui constitue le dispositif de compensation du jeu des dents.

2. Dispositif d'entraînement à crémaillère conforme à la revendication 1, **caractérisé en ce que** l'élément d'accrochage denté (2) est relié via un tourillon d'entraînement (5) à un dispositif dont la position peut être modifiée comme, par exemple, un dispositif de lecture et/ou d'enregistrement appelé "Pickup" d'un appareil d'enregistrement et/ou de lecture pour support d'enregistrement optique CD.

3. Dispositif d'entraînement à crémaillère conforme à la revendication 1 ou 2, **caractérisé en ce que** l'élément d'accrochage denté (2) est réalisé en une seule pièce.

4. Dispositif d'entraînement à crémaillère conforme à l'une des revendications 1 à 3, **caractérisé en ce que** l'élément d'accrochage denté (2) est réalisé en une seule pièce en copolymère acétal.

5. Dispositif d'entraînement à crémaillère doté d'un dispositif de compensation du jeu des dents, **caractérisé en ce qu**'on utilise pour la compensation du jeu des dents un élément d'accrochage denté (2) constitué d'une crémaillère (21) présentant parallèlement à sa denture un orifice de guidage (22) dirigé vers un axe de palier (3) de son pignon d'entraînement (4).

6. Dispositif d'entraînement à crémaillère doté d'un dispositif de compensation du jeu des dents, **caractérisé en ce qu'**un dispositif d'entraînement à crémaillère qui comporte un élément d'accrochage denté (2) constitué d'une crémaillère (21) présentant parallèlement à sa denture un orifice de guidage (22) dirigé vers un axe de palier (3) de son pignon d'entraînement (4) est utilisé comme dispositif de positionnement pour la commande d'un dispositif de lecture et/ou d'enregistrement d'un appareil d'enregistrement et/ou de lecture pour support d'enregistrement optique CD.
